# EUROPEAN PATENT APPLICATION

(11) **EP 4 521 201 A1**
(43) Date of publication of application: **12.03.2025**
(21) Application number: 23196527.8
(22) Date of filing: 11.09.2023
(51) Int. Cl.: G06F 3/01, B60K 35/00

(54) **USER INPUT DEVICE**

(71) Applicant: Harman Becker Automotive Systems GmbH, 76307 Karlsbad (DE)
(72) Inventor: SANDSTRÖM, Carl Alexander, 76307 Karlsbad (DE); JÖRGENSEN, Gorm H., 76307 Karlsbad (DE); ANDREASEN, Kim Fisaek, 76307 Karlsbad (DE)
(74) Representative: Westphal, Mussgnug & Partner, Patentanwälte mbB

(57) **Abstract**

A user input device (200) comprises a user interface (20) and at least one sensor (22), wherein the at least one sensor (22) is configured to determine a direction from which a user's hand approaches the user interface (20), and the user input device (200) is configured to perform an action based on the direction determined by the at least one sensor (22).

## Description

### TECHNICAL FIELD

The disclosure relates to a user input device, in particular to a user input device in a vehicle.

### BACKGROUND

Vehicles provide more and more functions to increase driver comfort, for example. Many functions can be controlled by means of user interfaces such as control buttons or control knobs. Many vehicles today further provide different displays integrated in a dashboard of the vehicle in order to provide different information for a driver and/or occupants of the vehicle. Space within a vehicle, however, is limited. Especially in smaller vehicles, the space available in the dashboard or a center console of a vehicle which can be used for implementing different displays and user interfaces such as, e.g., control knobs, or control buttons, is generally limited.

There is a need for a user input device which can be implemented in a compact and space-saving way.

### SUMMARY

A user input device is disclosed herein. The user input device includes a user interface and at least one sensor, wherein the at least one sensor is configured to determine a direction from which a user's hand approaches the user interface, and the user input device is configured to perform an action based on the direction determined by the at least one sensor.

A method includes determining, by means of at least one sensor, a direction from which a user's hand approaches a user interface of a user input device, and performing an action, by means of the user input device, based on the direction determined by the at least one sensor.

Other systems, features and advantages of the disclosure will be or will become apparent to one with skill in the art upon examination of the following detailed description and figures. It is intended that all such additional systems, methods, features and advantages included within this description, be within the scope of the invention and be protected by the following claims.

### BRIEF DESCRIPTION OF THE DRAWINGS

The arrangements may be better understood with reference to the following description and drawings. The components in the figures are not necessarily to scale, emphasis instead being placed upon illustrating the principles of the invention. Moreover, in the figures, like referenced numerals designate corresponding parts throughout the different views.
Figure 1 schematically illustrates a block diagram of a user input device according to embodiments of the disclosure.
Figure 2 schematically illustrates a vehicle comprising a user input device according to embodiments of the disclosure.
Figure 3, including Figures 3A and 3B, schematically illustrates different settings on a touch screen as provided by a user input device.
Figure 4, including Figures 4A and 4B, schematically illustrates a block diagram of a user input device according to further embodiments of the disclosure.
Figure 5 schematically illustrates a flow diagram of a method according to embodiments of the disclosure.

### DETAILED DESCRIPTION

The user input device and related method according to the various embodiments described herein allow to reduce the overall number of input devices (i.e., user interfaces) in an environment such as, e.g., a vehicle, in which two or more users may be present. Each of a plurality of users may want to control the settings of a specific application individually. For example, many vehicles today provide individual sound zones or climate zones for different passengers of the vehicle. That is, a driver of the vehicle is able to listen to different contents than other passengers of the vehicle, or may listen to the same contents at a different volume than other passengers of the vehicle. Different climate zones within a vehicle allow different passengers to adjust, e.g., an ambient temperature individually. This generally requires a great number of user interfaces such as, e.g., control buttons or control knobs, for example.

For example, a driver of a vehicle may operate a first control button in order to control the settings of a seat heating of a driver's seat, while a front passenger may operate a second control button in order to control the settings of a seat heating of a front passenger's seat. Similarly, separate control buttons are often provided for a driver and front passenger in order to control individual climate zones. The control buttons or control knobs as well as any other kind of user interfaces, however, require a significant amount of space in the dashboard or center console. The user input device and related method disclosed herein provide the same functionality as conventional systems with a reduced number of user interfaces (e.g., control knobs, control buttons, or touch screens).

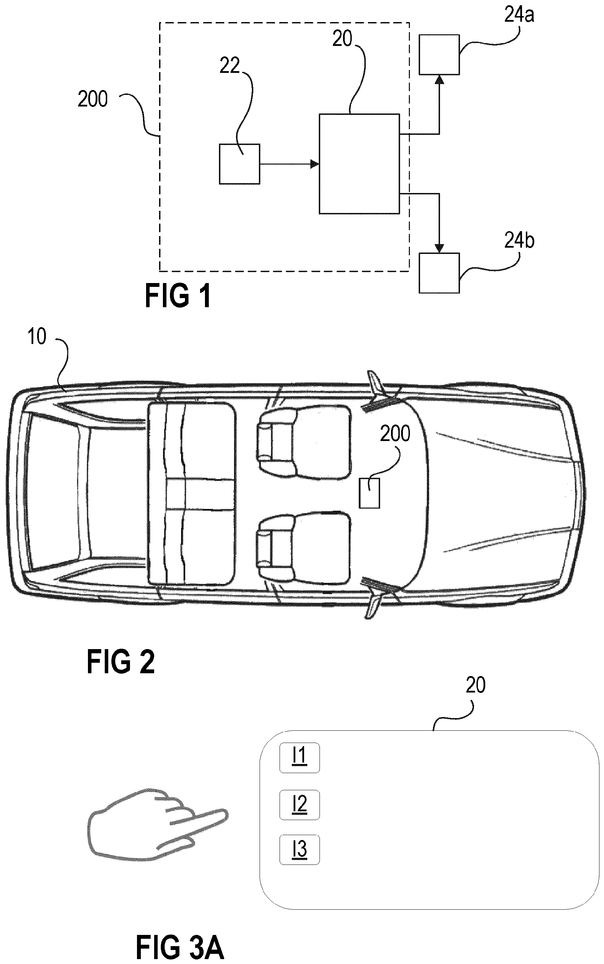

Figure 1 schematically illustrates a user input device 200 according to embodiments of the disclosure. The user input device 200 comprises a user interface 20 and at least one sensor 22. The at least one sensor 22 is configured to determine a direction from which a user's hand approaches the user interface 20, and the user input device 200 is configured to perform an action based on the direction determined by the at least one sensor 22. The user interface 20 may comprise a control knob or a control button, for example. When the control knob or control button is being operated and it is detected by means of the at least one sensor 22 that the control knob or control button is approached from a first side, the user input device 200 may be configured to adjust one or more settings of a first subsystem 24a of an application, the first subsystem 24a being related to a first user. On the other hand, when the control knob or control button is being operated and it is detected by means of the at least one sensor 22 that the control knob or control button is approached from a second side that is different from the first side, the user input device 200 may be configured to adjust one or more settings of a second subsystem 24b of the application, the second subsystem 24b being related to a second user. The application may be one of a sound system, a heating system, a fan system, a climate system, a seat position system, a light system, a media system, or a window control system, for example. It is even possible that the application is some kind of social media or music/video streaming service, wherein the first subsystem 24a is a personal account of a first user, and the second subsystem 24b is a personal account of a second user.

According to one example, the application is a seat heating of a vehicle. A single control knob or control button (user interface 20) may be provided in a dashboard of the vehicle in order to control both a seat heating of a driver's seat (first subsystem 24a) as well as a seat heating of a front passenger's seat (second subsystem 24b). When a driver of the vehicle who is seated on the driver's seat approaches the control knob or control button with his hand, the at least one sensor 22 will detect that the control knob or control button is approached from a side related to the driver's seat (e.g., from the left in a left-hand drive vehicle). When the driver pushes the respective control button, for example, only the settings of the seat heating of the driver's seat will be changed accordingly. Similarly, when a front passenger seated in the front passenger seat approaches and operates the control knob or control button, only the settings of the seat heating of the front passenger's seat will be changed accordingly. In this way, only a single control button will be required to control both the settings of the driver's seat heating as well as the front passenger's seat heating individually. Similarly, any other application may be controlled by means of a single control button or control knob for which individual settings are available for different passengers of a vehicle. In this way, the overall number of control knobs and control buttons may be significantly decreased while still being able to control the same number of applications and corresponding subsystems as compared to systems that provide separate user interfaces 20 for different users.

The at least one sensor 22 may be any kind of sensor that is able to reliably detect from which side a user's hand approaches the user interface 20. For example, the at least one sensor 22 may comprise at least one of one or more capacitive sensors, one or more cameras, one or more radar devices, one or more light-based proximity sensors, or one or more ultrasonic proximity sensors. For example, one or more capacitive sensors may be arranged adjacent to the user interface 20. According to one example, one capacitive sensor is arranged on a first side of the user interface 20 (e.g., left side), and a second capacitive sensor is arranged on a second side of the user interface 20 (e.g., right side). Depending on the direction from which a user approaches the user interface 20, either the first capacitive sensor or the second capacitive sensor will output a corresponding signal which indicates from which side the user interface 20 is approached. In other words, if a hand approaches the user interface 20 from a first side, other sensors will be activated as compared to when a hand approaches the user interface from a second side. Any other number of capacitive sensors instead of two is generally also possible. Capacitive proximity sensors may be arranged, e.g., below a panel covering the respective user interface 20 (e.g., control knob or control button) in a center console or dashboard.

As has been mentioned above, however, using capacitive proximity sensors is only an example. Instead of or in addition to the capacitive sensors as have been described above, any other kind of suitable (proximity) sensors may be used. For example, it may be determined by means of computer vision methods, from which side a user's hand approaches the user interface 20. In such cases, the at least one sensor 22 may comprise at least one camera, for example. Some advanced driver-assistance systems (ADAS) today already use computer vision technology, e.g., for driver monitoring. At least some elements of such systems that are already present in a vehicle may also be used by the user input device 200, for example. That is, certain components may be shared between the systems which highly reduces the space requirements of the user input device 200. The same applies, for example, for radar technology elements that may be used, e.g., to detect the presence of passengers for other systems (e.g., ADAS), and which may be additionally used by the user input device 200. For example, information relating to a direction from which a hand approaches a user interface 20 may be extracted as residual information from already existing systems. According to a further example a capacitive coupling between a seat (e.g., driver's seat, or front passenger seat) and the user interface 20 may be determined. This may be implemented, for example, by exciting a body of an occupant seated on the respective seat by means of a signature signal. It is generally also possible to directly determine the capacitive coupling.

Figure 2 schematically illustrates a vehicle 10 comprising a user input device 200 according to embodiments of the disclosure. The user input device 200 is illustrated as being arranged in a dashboard of the vehicle 10. In particular, at least the user interface 20 may be arranged in a dashboard or a center console of the vehicle 10, while other components such as, e.g., one or more sensors 22 may be arranged in different positions with the vehicle 10. A camera, for example, may be arranged in a roof line of the vehicle 10 or in any other suitable position from which a hand approaching the user interface 20 may reliably be detected.

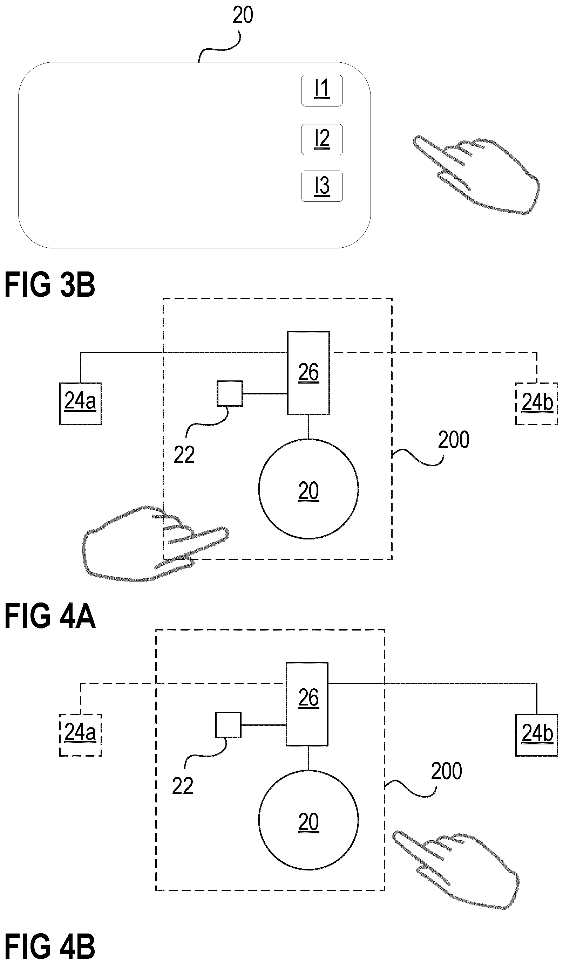

Instead of or in addition to control knobs or control buttons, a user interface 20 may comprise one or more touch screens. This is schematically illustrated in Figures 3A and 3B. According to one example, contents displayed on the touch screen may be arranged differently based on the direction determined by the at least one sensor 22. In the example illustrated in Figure 3A, a hand approaches the touch screen from the left hand side. Any icons I1, I2, I3 that are displayed on the touch screen may be arranged towards the left side of the touch screen such that the user may easily reach them. If, however, a hand approaches the touch screen from the right side (Figure 3B), the same icons I1, I2, I3 may be arranged towards the right side of the touch screen. In this way, any user may easily and conveniently operate the touch screen. Instead of or in addition to arranging items on a touch screen based on a direction from which a hand approaches the touch screen, the same functionality as has been described with respect to a control knob or control button above may be implemented. That is, when input is received via the touch screen and it is detected by means of the at least one sensor 22 that the touch screen is approached from a first side, the user input device 200 may be configured to adjust one or more settings of a first subsystem 24a of an application, the first subsystem 24a being related to a first user. Similarly, when input is received via the touch screen and it is detected by means of the at least one sensor 22 that the touch screen is approached from a second side that is different from the first side, the user input device 200 may be configured to adjust one or more settings of a second subsystem 24b of the application, the second subsystem 24b being related to a second user. That is, a single icon may be presented on the touch screen which can be used to either control the first subsystem 24a or the second subsystem 24b, depending on the direction from which the touch screen is approached.

According to further examples, it is also possible that the user interface (i.e. the touch screen) is personalized depending on the side the user interface 20 is approached from. That is, the contents that are displayed on a touch screen may be personalized depending on which user is operating it. For example, if it is detected that a touch screen is approached from a first side, content related to a first user may be displayed on the touch screen, e.g., a personal social media account, music/video streaming service, etc. If it is detected that the touch screen is approached from the second side, content related to a second user may be displayed on the touch screen. Personalizing the user interface may be implemented alternatively or in addition to arranging icons I1, I2, I3 on the touch screen in a specific way.

Now referring to Figures 4A and 4B, the user input device 200 may further comprise a control unit 26. The control unit 26 may receive input from the user interface 20 as well as from the at least one sensor 22. The input from the user interface 20 concerns the settings that are to be changed (e.g., volume, temperature, etc.), and the input from the at least one sensor 22 concerns the subsystem 24a, 24b for which the settings are to be changed. As has been described above and as is schematically illustrated in Figure 4A, the settings of the first subsystem 24a may be changed, but not the settings of the second subsystem 24b, if it is detected by means of the at least one sensor 22 that a user's hand approaches the user interface 20 from a first side (e.g., from the left). Similarly, as has been described above and as is schematically illustrated in Figure 4B, the settings of the second subsystem 24b may be changed, but not the settings of the first subsystem 24a, if it is detected by means of the at least one sensor 22 that a user's hand approaches the user interface 20 from a second side (e.g., from the right).

The user input device 200 may be operated in an individual zone state as has been described above, in which different zones may be operated individually depending on a direction from which a user's hand approaches the user interface 20. According to further embodiments, the user input device may also be operated in a non-individual zone state. That is, the user input device 200 may be switched from an individual zone state to a non-individual zone state and vice versa. In a non-individual zone state all subsystems 24a, 24b of an application may be controlled simultaneously when the user interface 20 is being operated.

In the examples illustrated in the figures and described above, only two different subsystems 24a, 24b are controlled individually by means of a single user interface 20. It is, however, generally possible that even more than two subsystems may be controlled individually. It is further noted that the general concept has been described with respect to a user input device in a passenger car above. Generally, however, the vehicle 10 may be any kind of vehicle such as, e.g., a passenger car, a van, a camper van, a caravan, a truck, a bus, a tractor, an airplane, a ship, etc. The user input device 200 may further be implemented in any other environment other than a vehicle instead.

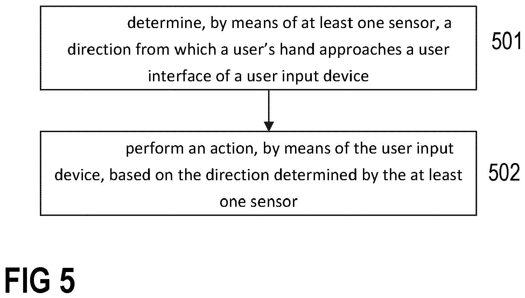

Now referring to Figure 5, a method according to embodiments of the disclosure is schematically illustrated. The method comprises determining, by means of at least one sensor 22, a direction from which a user's hand approaches a user interface 20 of a user input device 200 (step 501), and performing an action, by means of the user input device 200, based on the direction determined by the at least one sensor 22 (step 502). As has been described above, the action performed by the user input device 200 may comprise operating either a first subsystem 24a, or a second subsystem 24b, depending on the direction from which a user's hand approaches the user interface 20. Alternatively or in addition the action may comprise arranging contents displayed on a touch screen based on the direction determined by the at least one sensor 22.

It may be understood, that the illustrated systems are merely examples. While various embodiments of the invention have been described, it will be apparent to those of ordinary skill in the art that many more embodiments and implementations are possible within the scope of the invention. In particular, the skilled person will recognize the interchangeability of various features from different embodiments. Although these techniques and systems have been disclosed in the context of certain embodiments and examples, it will be understood that these techniques and systems may be extended beyond the specifically disclosed embodiments to other embodiments and/or uses and obvious modifications thereof. Accordingly, the invention is not to be restricted except in light of the attached claims and their equivalents.

The description of embodiments has been presented for purposes of illustration and description. Suitable modifications and variations to the embodiments may be performed in light of the above description or may be acquired from practicing the methods. The described arrangements are exemplary in nature, and may include additional elements and/or omit elements. As used in this application, an element recited in the singular and proceeded with the word "a" or "an" should be understood as not excluding plural of said elements, unless such exclusion is stated. Furthermore, references to "one embodiment" or "one example" of the present disclosure are not intended to be interpreted as excluding the existence of additional embodiments that also incorporate the recited features. The terms "first," "second," and "third," etc. are used merely as labels, and are not intended to impose numerical requirements or a particular positional order on their objects. The described systems are exemplary in nature, and may include additional elements and/or omit elements. The subject matter of the present disclosure includes all novel and non-obvious combinations and subcombinations of the various systems and configurations, and other features, functions, and/or properties disclosed. The following claims particularly point out subject matter from the above disclosure that is regarded as novel and non-obvious.

## Claims

1. A user input device (200) comprises a user interface (20) and at least one sensor (22), wherein
the at least one sensor (22) is configured to determine a direction from which a user's hand approaches the user interface (20), and
the user input device (200) is configured to perform an action based on the direction determined by the at least one sensor (22).

2. The user input device (200) of claim 1, wherein the at least one sensor (22) comprises at least one of:
one or more capacitive sensors;
one or more cameras;
one or more radar devices;
one or more light-based proximity sensors; or
one or more ultrasonic proximity sensors.

3. The user input device (200) of claim 1 or 2, wherein the user interface (20) comprises a control knob or a control button.

4. The user input device (200) of claim 3, wherein
when the control knob or control button is being operated and it is detected by means of the at least one sensor (22) that the control knob or control button is approached from a first side, the user input device (200) is configured to adjust one or more settings of a first subsystem (24a) of an application, the first subsystem (24a) being related to a first user; and
when the control knob or control button is being operated and it is detected by means of the at least one sensor (22) that the control knob or control button is approached from a second side that is different from the first side, the user input device (200) is configured to adjust one or more settings of a second subsystem (24b) of the application, the second subsystem (24b) being related to a second user.

5. The user input device (200) of claim 1 or 2, wherein the user interface (20) comprises a touch screen.

6. The user input device (200) of claim 5, wherein the action performed by the user input device (200) comprises presenting and/or arranging contents displayed on the touch screen based on the direction determined by the at least one sensor (22).

7. The user input device (200) of claim 5 or 6, wherein
when input is received via the touch screen and it is detected by means of the at least one sensor (22) that the touch screen is approached from a first side, the user input device (200) is configured to adjust one or more settings of a first subsystem (24a) of an application, the first subsystem (24a) being related to a first user; and
when input is received via the touch screen and it is detected by means of the at least one sensor (22) that the touch screen is approached from a second side that is different from the first side, the user input device (200) is configured to adjust one or more settings of a second subsystem (24b) of the application, the second subsystem (24b) being related to a second user.

8. The user input device (220) of claim 4 or 7, wherein the application is one of a sound system, a heating system, a fan system, a climate system, a seat position system, a light system, a media system, or a window control system.

9. The user input device (220) of claim 4 or 7, wherein the application is a social media or music and/or video streaming service, wherein the first subsystem (24a) is a personal account of the first user, and the second subsystem (24b) is a personal account of the second user.

10. The user input device (200) of any of the preceding claims, wherein the user input device (200) is arranged in a vehicle (10).

11. The user input device (200) of claim 10, wherein the vehicle (10) is a passenger car, a van, a camper van, a caravan, a truck, a bus, a tractor, an airplane, or a ship.

12. A method comprising
determine, by means of at least one sensor (22), a direction from which a user's hand approaches a user interface (20) of a user input device (200), and
perform an action, by means of the user input device (200), based on the direction determined by the at least one sensor (22).

## Amended claims

### Amended claims in accordance with Rule 137(2) EPC.

1. A user input device (200) comprises a user interface (20) and at least one sensor (22), wherein
the at least one sensor (22) is configured to determine a direction from which a user's hand approaches the user interface (20), and
the user input device (200) is configured to perform an action based on the direction determined by the at least one sensor (22), wherein
the user interface (20) comprises a touch screen,
when it is determined by means of the at least one sensor (22) that the user's hand approaches the touch screen from a first side, the action performed by the user input device (200) comprises arranging any icons (I1, I2, I3) that are displayed on the touch screen towards the first side of the touch screen, and
when it is determined by means of the at least one sensor (22) that the user's hand approaches the touch screen from a second side that is different from the first side, the action performed by the user input device (200) comprises arranging any icons (I1, I2, I3) that are displayed on the touch screen towards the second side of the touch screen.

2. The user input device (200) of claim 1, wherein the at least one sensor (22) comprises at least one of:
one or more capacitive sensors;
one or more cameras;
one or more radar devices;
one or more light-based proximity sensors; or
one or more ultrasonic proximity sensors.

3. The user input device (200) of claim 1 or 2, wherein the user interface (20) further comprises a control knob or a control button.

4. The user input device (200) of claim 3, wherein
when it is determined by means of the at least one sensor (22) that the user's hand approaches the control knob or control button from the first side, and the control knob or control button is being operated by the user's hand, the action performed by the user input device (200) further comprises adjusting one or more settings of a first subsystem (24a) of an application; and
when it is determined by means of the at least one sensor (22) that the user's hand approaches the control knob or control button from the second side, and the control knob or control button is being operated by the user's hand, the action performed by the user input device (200) further comprises adjusting one or more settings of a second subsystem (24b) of the application.

5. The user input device (200) of any of claims 1 to 4, wherein the action performed by the user input device (200) further comprises presenting contents displayed on the touch screen based on the direction determined by the at least one sensor (22).

6. The user input device (200) of claim 5, wherein
when it is determined by means of the at least one sensor (22) that the user's hand approaches the touch screen from the first side and input is received via the touch screen, the action performed by the user input device (200) further comprises adjusting one or more settings of a first subsystem (24a) of an application; and
when it is determined by means of the at least one sensor (22) that the user's hand approaches the touch screen from the side and input is received via the touch screen, the action performed by the user input device (200) further comprises adjusting one or more settings of a second subsystem (24b) of the application.

7. The user input device (220) of claim 4 or 6, wherein the application is one of a sound system, a heating system, a fan system, a climate system, a seat position system, a light system, a media system, or a window control system.

8. The user input device (220) of claim 4 or 6, wherein the application is a social media or music and/or video streaming service, wherein the first subsystem (24a) is a personal account of the first user, and the second subsystem (24b) is a personal account of the second user.

9. The user input device (200) of any of the preceding claims, wherein the user input device (200) is arranged in a vehicle (10).

10. The user input device (200) of claim 9, wherein the vehicle (10) is a passenger car, a van, a camper van, a caravan, a truck, a bus, a tractor, an airplane, or a ship.

11. A method comprising
determine, by means of at least one sensor (22), a direction from which a user's hand approaches a user interface (20) of a user input device (200), and
perform an action, by means of the user input device (200), based on the direction determined by the at least one sensor (22), wherein
the user interface (20) comprises a touch screen,
when it is determined by means of the at least one sensor (22) that the user's hand approaches the touch screen from a first side, the action performed by the user input device (200) comprises arranging any icons (I1, I2, I3) that are displayed on the touch screen towards the first side of the touch screen, and
when it is determined by means of the at least one sensor (22) that the user's hand approaches the touch screen from a second side that is different from the first side, the action performed by the user input device (200) comprises arranging any icons (I1, I2, I3) that are displayed on the touch screen towards the second side of the touch screen.
